# EUROPÄISCHE PATENTSCHRIFT

(11) **EP 1 099 592 B1**
(45) Veröffentlichungstag und Bekanntmachung des Hinweises auf die Patenterteilung: **23.06.2004**
(21) Anmeldenummer: 00122290.0
(22) Anmeldetag: 20.10.2000
(51) Int. Cl.: B60N 2/02

(54) **Bedieneinrichtung zur elektrischen Verstellung der Kfz-Sitze**
Switch arrangement for the electrical adjustment of vehicle seats
Disposition de commande pour le réglage électrique de sièges de véhicule

(30) Priorität: 11.11.1999 DE 19954211
(43) Veröffentlichungstag der Anmeldung: 16.05.2001
(73) Patentinhaber: Volkswagen Aktiengesellschaft, 38436 Wolfsburg (DE)
(72) Erfinder: Wollenhaupt, Ralf, 38350 Helmstedt (DE); Pietsch, Matthias, 38154 Königslutter (DE)

(56) Entgegenhaltungen:
- DE-A- 19 729 866
- DE-A- 19 946 021
- DE-C- 3 933 561
- DE-C- 4 228 849
- DE-U- 29 711 159
- FR-A- 2 696 384

## Beschreibung

Die Erfindung betrifft eine Bedieneinrichtung zur elektrischen Verstellung der Kraftfahrzeugsitze, mit mehreren, den einzelnen Sitzpartien zugewiesenen Bedienelementen, gemäß Oberbegriff des Patentanspruches 1.

Im Automobilbau werden die Fahrzeugsitze mittlerweile zumeist als elektrisch verstellbar konzipiert. Hierbei müssen die üblichen Funktionen, wie Fahren des Sitzes nach vorne oder nach hinten, nach oben oder nach unten, sowie die Verstellung der einzelnen Sitzelemente, wie Sitzfläche, Sitzlehne und Kopfstütze, berücksichtigt werden. Darüber hinaus gibt es kombinierte Bewegungen, die über die Schaltelemente entsprechend berücksichtigt werden müssen. Die elektrische Verstellbarkeit der Fahrzeugsitze ergibt in vorteilhafter Weise die Möglichkeit, eine Mehrzahl von an verschiedene Passagiere anpaßbare und abspeicherbare Gesamtsitzeinstellung abzuspeichern und über Memorytasten abrufen zu können.

Die Vielfältigkeit der Funktionen bedingt natürlich auch eine entsprechende Anzahl von einzelnen Schaltelementen.

So ist aus der DE 197 29 866 A1 ein Sitzverstellschalter mit vielen einzelnen Schaltkörpern bekannt. Zusätzlich zur einfachen Sitzlehnenverstellung ist eine sog. Knick-Lehnen-Verstellung vorgesehen. Dies betrifft eine besondere Art von Fahrzeugsitzen, bei welchen die Rückenlehne noch zusätzlich einen separat einstellbaren Knicklehnenbereich am Kopf der Rückenlehne aufweist. Eine Verstellung dieser Knicklehne wird dadurch erreicht, daß der Sitzlehnenkopf, d. h. nicht die Kopfstütze, sondern der nahe der Kopfstütze angeordnete obere Bereich der Sitzlehne gesondert von der übrigen Sitzlehne geneigt wird. Um eine solche Funktion implementieren zu können, ist im genannten Stand der Technik zur Sitzlehnenneigungsverstellung bzw. Verstellung des Lehnenkopfes, der einfache Rückenlehnenverstellschalter geteilt, so daß sich somit faktisch ein weiterer Schalter ergibt.

Aus der DE 297 11 159 U1 ist ein weiteres Beispiel für die gesonderte Einstellbarkeit des Sitzlehnenkopfes zu entnehmen.

Aus der DE 28 36 004 C2 ist eine Bedieneinrichtung für eine Verstellung der Kraftfahrzeugsitze im allgemeinen bekannt. Hierbei werden die Funktionen Kippbarkeit der Sitzlehne, Sitzhöhen- und Sitzlängsverstellung und Bewegung des kompletten Fahrzeugsitzes vor oder zurück sowie die Änderung der Sitzhöhe, als schaltbare bzw. betätigbare Funktionen implementiert.

Des weiteren ist aus der Deutschen Patentschrift DE 39 33 561 C1 eine Steuereinrichtung zur Steuerung der Stellmotoren für die Verstellung eines Kraftfahrzeugsitzes betrieben. Bei dieser genannten Einrichtung ist das Betätigungselement für die Sitzfläche eines Kraftfahrzeugsitzes durch eine Fuge in zwei unabhängig voneinander betätigbare Betätigungselemente geteilt, wobei eines der Betätigungselemente für die Längsverstellung des gesamten Kfz-Sitzes und das andere Betätigungselement für die Verstellung des Abstandes zwischen Sitzvorderkante und Sitzlehne vorgesehen ist.

Allen einzelnen Bedienelementen der genannten Art ist das Problem zu eigen, daß bei einer Vielzahl von einstellbaren Funktionen, auch eine Vielzahl von Schaltkörpern oder Betätigungselementen vorgesehen werden müssen.

Im Hinblick auf eine sichere und einfache, sowie auch selbsterklärende Bedienung der Einrichtung ist eine übermäßige Fülle von Schaltern jedoch nachteilig.

Aus diesem Grund liegt der Erfindung somit die Aufgabe zugrunde, eine Bedieneinrichtung der gattungsgemäßen Art dahingehend weiterzubilden, daß eine weitere Funktion in das Bedienelement implementiert werden kann, ohne dabei ein weiteres Bedienelement oder Schaltelement vorsehen zu müssen.

Die gestellte Aufgabe ist bei einer Bedieneinrichtung der gattungsgemäßen Art erfindungsgemäß durch die kennzeichnenden Merkmale des Patentanspruches 1 gelöst.

Weitere vorteilhafte Ausgestaltungen der erfindungsgemäßen Bedieneinrichtung sind in den übrigen abhängigen Ansprüchen angegeben.

Die hierbei weitere, implementierte Verstellfunktion ist die Betätigung der sog. Knick-Lehnen-Verstellung. Wie oben aus dem erwähnten Stand der Technik ersichtlich, sind hierfür separate zusätzliche Bedienelemente vorgesehen.

Demgegenüber ist die Knick-Lehnen-Verstellfunktion bei der erfindungsgemäßen Bedieneinrichtung in das Bedienelement der Kopfstützenverstellung integriert. Somit wird aufgabengemäß trotz einer weiteren Verstellfunktion des Fahrzeugsitzes kein weiteres Schaltelement oder Bedienelement notwendig.

In vorteilhafter Ausgestaltung der erfindungsgemäßen Bedieneinrichtung ist des weiteren angegeben, daß die Knick-Lehnen-Verstellung durch einen zusätzlichen, vom Kopfstützenverstellweg verschiedenen Verstellweg realisiert ist. Um also die erfindungsgemäße Implementierung der Knick-Lehnen-Verstellung in das Bedienelement der Kopfstützenverstellung zu integrieren, ist hierbei das Bedienelement über einen weiteren, also zusätzlichen Bedienweg betätigbar. Dieser Verstellweg zur Knick-Lehnen-Verstellung liegt dabei zumindest nahezu senkrecht zum Verstellweg zur Kopfstützenhöhenverstellung. Damit ist eine deutliche Trennung der Funktionen gegeben, da die Verstellwege im Idealfall orthogonal zueinander sind.

Die Integration der Knick-Lehnen-Verstellung in den Verstellschalter bzw. das Bedienelement der Kopfstützenverstellung hat neben der haptisch vorteilhaften Funktion auch eine örtliche logische Zuweisung der Verstellfunktion. Der Bediener versteht sofort, daß er durch nach hinten oder vorne schieben des Bedienelementes für die Kopfstützenverstellung die Knick-Lehnen-Verstellung anspricht. Mit der Veränderung der Knick-Lehnen wird auch insgesamt die Lage der auf der oberen Knick-Lehne befestigten Kopfstütze mitbeeinflußt.

In weiterer vorteilhafter Ausgestaltung ist angegeben, daß die Bedieneinrichtung auf einem zusammenhängenden Bedientableau angeordnet ist, auf welchem weitere Schalter zur sitzbezogenen Bedienung angeordnet sind. Mit Hilfe dieses Bedientableaus sind alle verstellrelevanten Schalt- oder Bedienelemente zusammengefaßt, was zum einen eine gute Haptik und zum anderen auch eine logische Zuweisung der Schaltfunktionen an das zu verstellende Element, nämlich den Fahrzeugsitz, aufweist.

In weiterer vorteilhafter Ausgestaltung ist angegeben, daß die Gesamtsitzhöhenverstellung durch ein die Sitzfläche und Sitzlehne entsprechend symbolisierendes Bedienelement bzw. einen entsprechend separierten Bedienschalter erfolgt. Somit werden komplizierte Schalter und Schalterkonstruktionen vermieden, die dann notwendig werden, wenn man die einzelnen Bedienelemente als Sitzelemente symbolisiert, jedoch auch eine insgesamtige Verstellung vornehmen will. Dies ist jedoch hierbei verhindert, da zur Sitzhöhenverstellung ein von den übrigen genannten Bedienelementen separierter Bedienschalter vorgesehen ist, der jedoch ebenfalls auf dem Bedientableau angeordnet bzw. auf demselben integriert ist. Die Vermeidung solcher Schalter, auch Schalterkonstruktionen, hat den Vorteil, daß die Bedieneinrichtung weniger störanfällig ist.

In weiterer vorteilhafter Ausgestaltung ist angegeben, daß die Bedieneinrichtung seitlich, d. h. am Außenrand an dem Sitzflächenelement des Fahrzeugsitzes angeordnet ist. Dort ist die Bedieneinrichtung in einer logisch günstigsten Weise plaziert.

Die sich somit ergebende einfache und bzgl. der Bedienelementezahl minimierte Bauweise begünstigt dabei, daß das Bedientableau derart am Sitz angeordnet werden kann, daß man zusätzlich zum Greifen der Bedienelemente keine Blickkontakt zum Bedientableau herstellen muß. Dies reduziert zum einen die Fahrerablenkung, zum anderen ist die Haptik der erfindungsgemäßen Bedieneinrichtung so gut, daß die Ertastung der einzelnen Bedienelemente schnell und leicht auch ohne Blickkontakt erfolgen kann. Dies wiederum hat insgesamt den Vorteil, daß die Bedieneinrichtung, nicht wie ansonsten bekannt und üblich, entweder in der Türe oder in der einbaumäßig schon überbeanspruchten Mittelkonsole eingebaut werden muß, sondern sie kann auch seitlich am Sitz plaziert werden.

Die Erfindung ist in der Zeichnung dargestellt und nachfolgend näher beschrieben.

Es zeigt:
Fig. 1: erfindungsgemäße Bedieneinrichtung,
Fig. 2: Bedienelement am Sitz und
Fig. 3: Position der Knicklehne.

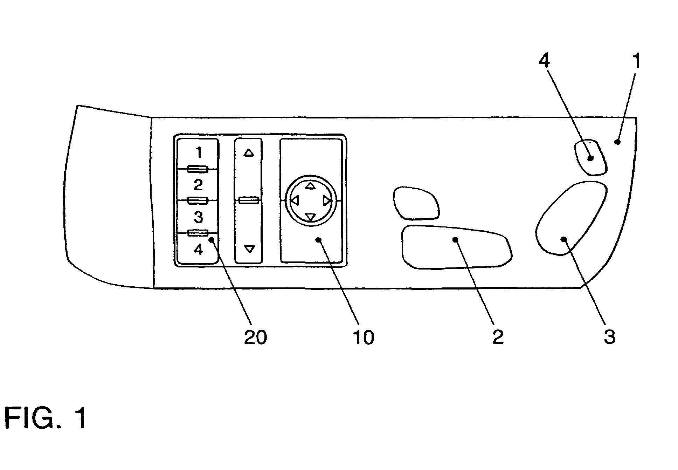

Fig. 1 zeigt das gesamte Bedientableau. Auf dem Bedientableau 1 der Bedieneinrichtung sind Schalter oder Bedienelemente 2, 3, 4 in Form eines Fahrzeugsitzes plaziert. Mit denselben werden die entsprechenden Funktionen, wie oben beschrieben, angesteuert. In erfindungsgemäßer Weise ist die Knick-Lehnen-Verstellung in das Kopfstützenbedienelement 4 integriert bzw. implementiert. Dabei bewirkt eine Auf- und Abbewegung in der Vertikalen des besagten Kopfstützenbedienelementes eine Höhenverstellung der Kopfstütze. Eine entsprechend dazu orthogonale Verstellwegbetätigung nach hinten oder vorne löst dabei in entsprechender Weise die Knick-Lehnen-Verstellung aus.

Alle übrigen Schalter, wie beispielsweise der Sitzverstellschalter 10 in Form eines Joysticks oder Cursorschalters sind von den übrigen Bedienelementen separiert, wenn auch auf dem- selben Bedientableau angeordnet, so daß eine insgesamtige Sitzverstellung in der dargestellten Weise nach oben oder unten oder vor und zurück angesteuert werden kann. Hierbei wird bewußt vermieden, die einzelnen Bedienelemente des Fahrzeugsitzelementes, des Rückenlehnenelementes und des Kopfstützen/Knick-Lehnenelementes nochmals auf einem zusätzlichen flächigen Schalter zu plazieren, so daß eine insgesamtige Bewegung die entsprechenden Verstellungen bewirkt. Hierbei wird die sog. Schalter-auf-Schalter-Konstruktion vermieden und das System wird haptisch einfacher und kann damit ohne direkten Blickkontakt bedient werden, was auch eine günstige Plazierung am Außenrand des Fahrzeugsitzes möglich macht.

Weitere Schalter mit entsprechender Numerierung sind als Memoryschalter 20 vorgesehen.

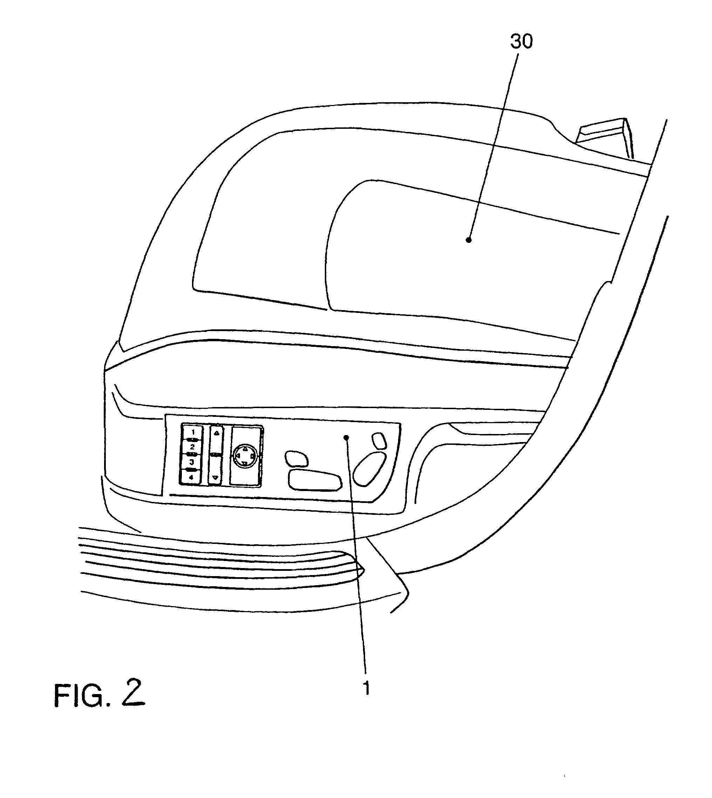

Fig. 2 zeigt in einer Ausgestaltungsform die Plazierung des Bedienelementes oder Bedientableaus 1 seitlich am Sitzelement 30 des Fahrzeugsitzes. Dort ist das Bedientableau 1 platzsparend und auch günstig angeordnet. Es wird kein wertvoller Platz mehr im Mittelkonsolenbereich benötigt. Dort ist das Bedientableau gut erreichbar. Da es ohnehin während der Fahrt bei dieser Plazierung nicht in Augenschein genommen werden kann, reduziert es letztlich indirekt die Fahrerablenkung. Alle einzelnen Bedienelemente sind gut ertastbar. Dadurch, dass die Knicklehnenverstellung mit in den Kopfstützenverstellschalter implementiert ist, und dadurch die Vorsehung eines weiteren Bedienschalters vermieden wird, ist nunmehr die komplette Sitzverstellung samt Knicklehnenverstellung haptisch einfacher.

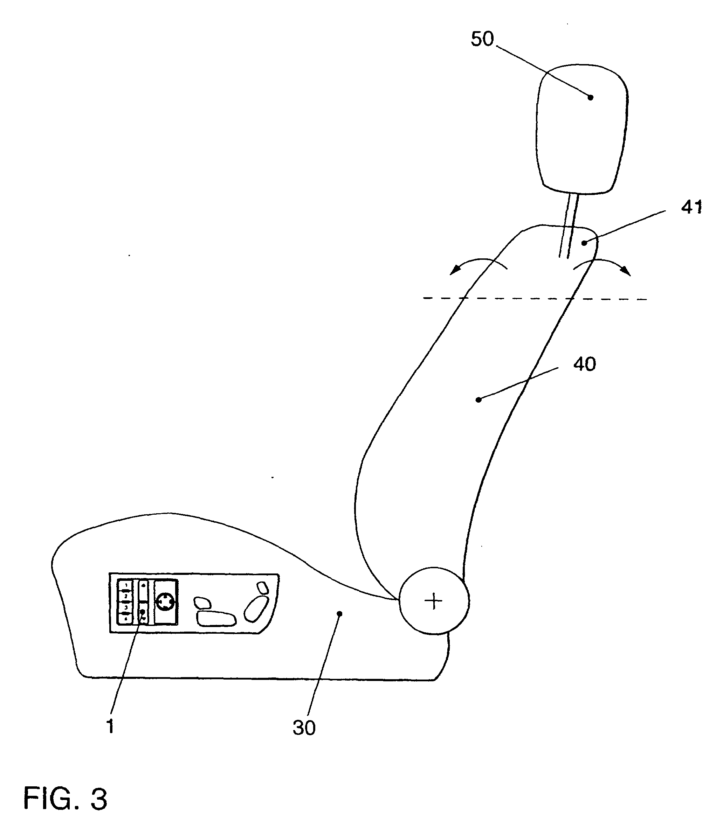

Fig. 3 zeigt schematisch nochmals einen kompletten Fahrzeugsitz. Dieser besteht aus einem Sitzelement 30, einer Rücken- oder Sitzlehne 40 sowie einer Kopfstütze 50. Der Kopf 41, das heißt das obere Ende der Rückenlehne ist über einen bestimmten Abschnitt geteilt und gesondert bewegbar. Dies stellt die besagte Knicklehne dar.

Dieser zur Rückenlehne gesondert bewegbare Lehnenabschnitt wird über eine entsprechende Implementierung eines zusätzlichen Betätigungsweges in den Kopfstützenverstellschalter implementiert. Da die einzelnen Bedienelemente bzw. Bedienschalter der einzelnen verstellbaren Sitzpartien in Form von Sitzsegmenten gestaltet sind, wäre eine entsprechende Teilung des Bedienschalter für die Rückenlehne in einen Bedienschalterteil für die Rückenlehne und einen für die Knicklehne lediglich eine konsequente Gestaltung. Dies würde aber faktisch zu einem weiteren Schalter führen, der insbesondere bei der gewählten Einbaulage der gesamten Bedieneinrichtung gemäß Fig. 2 von Nachteil wäre. Das Bedienelement für die Rückenlehne wäre haptisch nicht mehr deutlich vom Bedienelement für die Knicklehne zu trennen.

Bei der erfindungsgemäßen Implementierung sind die einzelnen Bedienelemente haptisch gut voneinander trennbar. Die Implementierung der Knicklehnenverstellung durch die Hinzunahme lediglich eines zusätzlichen Verstellweges, bzw. eines zusätzlichen Freiheitgrades ist die zusätzliche Betätigung jedoch haptisch erheblich besser. Im übrigen führt eine Verstellung der Knicklehne ohnehin zu einer korrelierten Bewegung der Kopfstütze. Dies ist dann auch aus Gründen der Bedienlogik deutlich konsequenter.

## Patentansprüche

1. Bedieneinrichtung zur elektrischen Verstellung der Kraftfahrzeugsitze, mit mehreren, den einzelnen Sitzpartien (30, 40, 50) zugewiesenen Bedienelementen (2, 3, 4),
**dadurch gekennzeichnet,**
**daß** in das Bedienelement (4) der Kopfstützenverstellung die Betätigung der Knick-Lehnen-Verstellung integriert bzw. implementiert ist.

2. Bedieneinrichtung nach Anspruch 1,
**dadurch gekennzeichnet,**
**daß** die Knick-Lehnen-Verstellung durch einen zusätzlichen, vom Kopfstützenverstellweg verschiedenen Verstellweg realisiert ist.

3. Bedieneinrichtung nach Anspruch 2,
**dadurch gekennzeichnet,**
**daß** der Verstellweg zur Knick-Lehnen-Verstellung zumindest nahezu senkrecht zum Verstellweg zur Kopfstützenhöhenverstellung verläuft.

4. Bedieneinrichtung nach einem der vorhergehenden Ansprüche,
**dadurch gekennzeichnet,**
**daß** die Bedienelemente (2, 3, 4) der Bedieneinrichtung (1) zusammen einen Kraftfahrzeugsitz mit Sitzfläche und Sitzlehne symbolisieren.

5. Bedieneinrichtung nach einem der vorhergehenden Ansprüche,
**dadurch gekennzeichnet,**
**daß** die Bedieneinrichtung (1) auf einem zusammenhängenden Bedientableau angeordnet ist, auf welchem weitere Schalter (10, 20) zur sitzbezogenen Bedienung angeordnet sind.

6. Bedieneinrichtung nach Anspruch 5,
**dadurch gekennzeichnet,**
**daß** die Gesamtsitzhöhenverstellung durch einen von den die Sitzfläche und Sitzlehne symbolisierenden Bedienelement separierten Bedienschalter (10) erfolgt.

7. Bedieneinrichtung nach Anspruch 5 oder 6,
**dadurch gekennzeichnet,**
**daß** die Bedieneinrichtung (1) seitlich, am Außenrand am Sitzflächenelement (30) des Kraftfahrzeugsitzes angeordnet ist.

## Claims

1. Operating device for the electrical adjustment of the motor vehicle seats, having a plurality of operating elements (2, 3, 4) assigned to the individual seat parts (30, 40, 50), **characterized in that** the actuation of the bending-backrest adjustment is integrated and implemented in the operating element (4) of the head-restraint adjustment.

2. Operating device according to Claim 1, **characterized in that** the bending-backrest adjustment is realized by an additional adjustment path which differs from the head-restraint adjustment path.

3. Operating device according to Claim 2, **characterized in that** the adjustment path for the bending-backrest adjustment runs at least virtually perpendicular with respect to the adjustment path for the head-restraint height adjustment.

4. Operating device according to one of the preceding claims, **characterized in that** the operating elements (2, 3, 4) of the operating device (1) together symbolize a motor vehicle seat with a seat surface and seat back.

5. Operating device according to one of the preceding claims, **characterized in that** the operating device (1) is arranged on an interconnected operating panel on which further switches (10, 20) for the seat-related operation are arranged.

6. Operating device according to Claim 5, **characterized in that** the entire seat height adjustment takes place by means of an operating switch (10) which is separated from the operating element symbolizing the seat surface and seat back.

7. Operating device according to Claim 5 or 6, **characterized in that** the operating device (1) is arranged at the side, on the outer edge of the seat surface element (30) of the motor vehicle seat.

## Revendications

1. Dispositif de commande pour le réglage électrique des sièges de véhicule, avec plusieurs éléments de commande (2, 3, 4) affectés aux différentes parties du siège (30, 40, 50),
**caractérisé en ce que**
la commande pour le réglage du dossier inclinable est intégrée ou implémentée dans l'élément de commande (4) du réglage du repose-tête.

2. Dispositif de commande selon la revendication 1,
**caractérisé en ce que**
le réglage du dossier inclinable est réalisé par l'intermédiaire d'une trajectoire de réglage supplémentaire, différente de la trajectoire de réglage du repose-tête.

3. Dispositif de commande selon la revendication 2,
**caractérisé en ce que**
la trajectoire de réglage pour le réglage du dossier inclinable s'étend de manière au moins à peu près perpendiculaire à la trajectoire de réglage en hauteur du repose-tête.

4. Dispositif de commande selon l'une des revendications précédentes,
**caractérisé en ce que**
les éléments de commande (2, 3, 4) du dispositif de commande (1) symbolisent ensemble un siège de véhicule avec une assise et un dossier.

5. Dispositif de commande selon l'une des revendications précédentes,
**caractérisé en ce que**
le dispositif de commande (1) est disposé sur un tableau de commande contigu, sur lequel sont disposés des commutateurs supplémentaires (10, 20) pour la commande du siège.

6. Dispositif de commande selon la revendication 5,
**caractérisé en ce que**
le réglage en hauteur de l'ensemble du siège s'effectue par l'intermédiaire d'un commutateur de commande (10) séparé des éléments de commande symbolisant l'assise et le dossier du siège.

7. Dispositif de commande selon la revendication 5 ou 6,
**caractérisé en ce que**
le dispositif de commande (1) est disposé latéralement, sur le bord extérieur de l'élément d'assise de siège (30) du siège de véhicule.
